# EUROPÄISCHE PATENTSCHRIFT

(11) **EP 1 336 515 B1**
(45) Veröffentlichungstag und Bekanntmachung des Hinweises auf die Patenterteilung: **20.02.2008**
(21) Anmeldenummer: 02028374.3
(22) Anmeldetag: 18.12.2002
(51) Int. Cl.: B60G 17/015, B60C 23/10, B60S 5/04

(54) **Kraftfahrzeug-Luftfederanlage mit einem Reifenfüllanschluss**
Motor vehicle air spring suspension unit with a tyre inflation connector
Système de suspension à ressort pneumatique pour véhicule automobile avec un raccord de gonflage du pneu

(30) Priorität: 13.02.2002 DE 10205841
(43) Veröffentlichungstag der Anmeldung: 20.08.2003
(73) Patentinhaber: Continental Aktiengesellschaft, 30165 Hannover (DE)
(72) Erfinder: Stiller, Alexander, Dr., 30823 Garbsen (DE); Nettelmann, Marc, 30826 Garbsen (DE)

(56) Entgegenhaltungen:
- EP-A- 0 813 016
- DE-C1- 10 016 970
- PATENT ABSTRACTS OF JAPAN Bd. 004, Nr. 045 (M-006), 9. April 1980 (1980-04-09) & JP 55 015321 A (AISIN SEIKI CO LTD), 2. Februar 1980 (1980-02-02)

## Beschreibung

### Stand der Technik

Die Erfindung geht aus von einer Kraftfahrzeug-Luftfederanlage mit einem Reifenfüllanschluss zum Befüllen des Reifens eines Reserverades, gemäß dem Oberbegriff des Anspruchs 1.

In dem gattungsbildenden Patent DE 100 16 970 C1 wird vorgeschlagen, das Reserverad eines Kraftfahrzeuges als Faltrad auszubilden, das nur im Bedarfsfall aufgefüllt wird.

Bei einem mit Luftfedern ausgestatteten Kraftfahrzeug kann der Kompressor der Niveauregelanlage zum Aufpumpen des Faltrades verwendet werden. Zu diesem Zweck ist die Kraftfahrzeug-Luftfederanlage mit einer Reifenbefüll-Hardware ausgestattet.

Die Struktur der Eigendiagnose bei herkömmlichen mit Reifenfüllanschluss versehenen Niveauregelanlagen sieht vor, dass als unmittelbare Reaktion auf einen erkannten Fehler, alle Systemkomponenten, die direkt von diesem Fehlerbild betroffen sind, in einen sicheren Zustand übergehen. So wird z. B. bei einem elektrischen Fehler am Kompressor-Relais der Kompressor in den sicheren Zustand AUS gebracht.
Für den Reifenfüllanschluss heißt dies, dass bei einem elektrischen Fehler an den Kontakten eine Reifenbefüllung nicht mehr zulässig ist - der Reifenfüllanschluss kann nicht mehr benutzt werden.
D. h.: Bei solchen, um Reifenbefüll-Hardware erweiterte Luftfederanlagen ist bisher auf die Diagnose "Fehler Reifenfüllanschluss" keine Reifenbefüllung zugelassen worden.

Es kann demnach passieren, dass bei einem elektrischen Fehler (z. B. durch Kurzschluss oder bei einer Leitungsunterbrechung) weder ein Nachfüllen möglich ist noch eine Warnung an den Fahrer ausgegeben wird. Diesen Missstand gilt es zu überwinden.

### Aufgabe, Lösung und Vorteile der Erfindung

Die erfindungsgemäße Methode zur Reserverad-Befüllung ist vornehmlich anwendbar in Fahrzeugsystemen mit einer Luftfeder-Niveauregelanlage und einer vorgesehenen Reifenbefüll-Hardware.

Mit Patentanspruch 1 wird ein Konzept vorgeschlagen, mit dem eine Reserveradbefüllung durch eine Bedienperson auch bei einem elektrischen Fehler in der Niveauregeleinrichtung der Luftfederanordnung ermöglicht wird.

Durch die erfindungsgemäße Weiterentwicklung ist eine deutlich höhere Verfügbarkeit der Sonderfunktion "Reserveradbefüllung" gegeben. Dies lässt sich an zwei Beispielen erklären:
1. Fahrzeug fährt im Gelände. Der Fahrer wählt über sein Niveau-Bedienteil die größt-mögliche Bodenfreiheit. Ohne dass der Fahrer den Reifenfüllanschluss angesteckt hat, wird nun ein elektrischer Fehler diagnostiziert (z. B. Kurzschluss nach Plus am Öffner). Folge: Die Niveauregelanlage arbeitet in einem speziell dafür konzipierten Notlauf, d. h. um fahrdynamisch kritische Situationen zu vermeiden, werden manuelle Aufregelvorgänge nicht mehr zugelassen - es finden nur noch geschwindigkeitsbedingte Abregelungen statt. Die Reifenfüllfunktion arbeitet nun Druck-orientiert, d. h. es wird bis zum Auslassventil ein Druck von 4,5 bar aufgebaut. Ist nun der Reifenfüllanschluss angesteckt worden, so wird auch dieser befüllt. Betätigt der Fahrer die manuelle Bedieneinheit, so wird das Reserverad befüllt.
2. Gleiche Anfangsbedingung. Fahrer will Plattfuß beheben. In diesem Augenblick, wo der Fahrer den Reifenfüllschlauch steckt, wird ein schlafender Fehler erkannt (z. B. Kurzschluss nach Masse am Öffner wird erst erkannt, da durch die Steckung nur der Schließerkontakt seinen Zustand wechselt). Folge: Die Niveauregelanlage arbeitet in einem speziell dafür konzipierten Notlauf, d. h. um fahrdynamisch kritische Situationen zu vermeiden, werden manuelle Aufregelvorgänge nicht mehr zugelassen - es finden nur noch geschwindigkeitsbedingte Abregelungen statt. Die Reifenfüllfunktion arbeitet nun Druck-orientiert, d. h. es wird bis zum Auslassventil ein Druck von 4,5 bar aufgebaut. Ist nun der Reifenfüllschlauch angesteckt worden, so wird auch dieser befüllt. Betätigt der Fahrer die manuelle Bedieneinheit, so wird das Reserverad befüllt.

### Zeichnungen

Ein Ausführungsbeispiel der Erfindung ist in den Zeichnungen dargestellt und in der nachfolgenden Beschreibung näher erläutert. Es zeigt:
Fig. 1 das Blockschaltbild einer mit Reifenfüllanschluss versehenen Luftfederanlage (elektrisch-pneumatisches Schaltbild);
Fig. 2 ein Blockschaltbild der elektrischen Daten;
Fig. 3a und Fig. 3b die Schaltpositionen des Reedkontaktes; und
Fig. 4 das Konzept bei elektrischen Fehlern am Wechsler-Kontakt des Reifenfüllanschlusses.

### Beschreibung

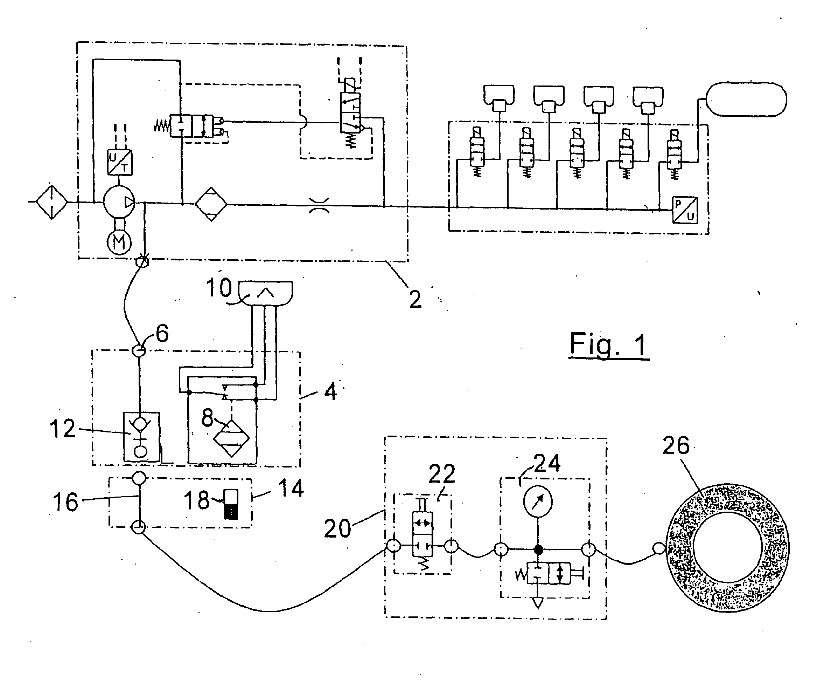

In Fig. 1 ist ein elektrisch-pneumatisches Blockschaltbild einer mit Reifenfüllanschluss versehenen Luftfederanlage wiedergegeben. Darin ist mit "2" das Luftversorgungssystem der Kraftfahrzeug-Luftfederanlage bezeichnet. Daran angeschlossen ist ein Reifenfüllanschluss 4. Dieser Reifenfüllanschluss 4 weist einen Luftversorgungsanschluss 6, einen Näherungsschalter 8, einen elektrischen Sensoranschluss 10 und einen pneumatischen Anschluss 12 für Schnellkupplung und Ventilanschluss auf. Der pneumatische Anschluss 12 für Schnellkupplung und Ventilanschluss enthält sowohl einen Schnellkupplungsanschluss für eine Bandbefüllung als auch einen Ventilanschluss 16 zum Aufschrauben eines Anschlusses.

An dem pneumatischen Anschluss 12 für Schnellkupplung und Ventilanschluss ist ein Bedienteil 14 mit einem pneumatischen Ventilanschluss 16 und einem Dauermagneten 18 angeschlossen. Hieran schließt sich eine Befülleinheit 20 mit Befüllventil 22 und Manometer 24 an. Mit "26" ist ein Faltrad symbolisiert.
Der Reifenfüllanschluss 4 enthält einen dreiadrigen Leitungsanschluss.

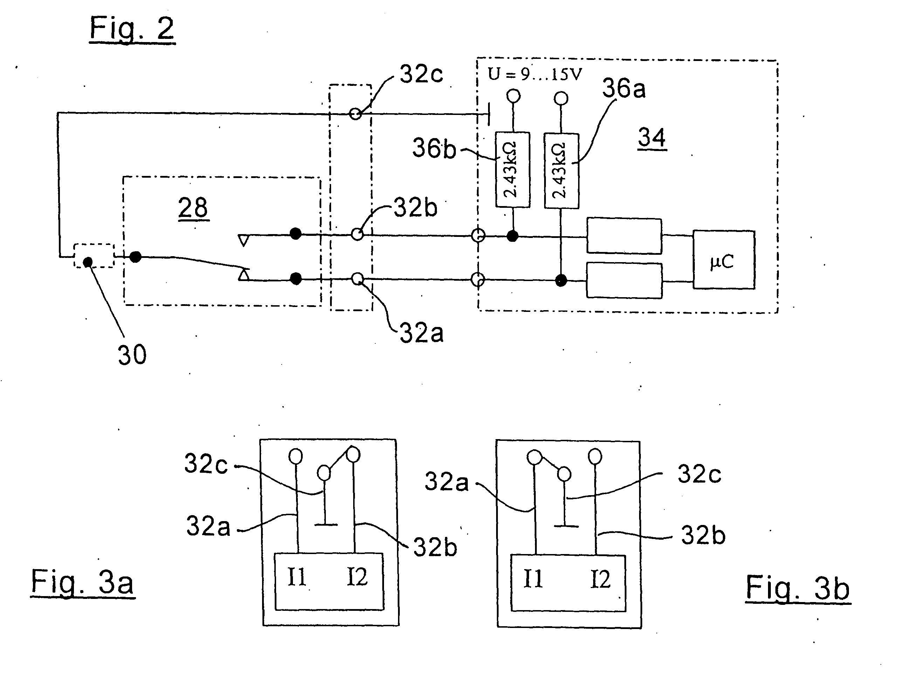

Fig. 2 zeigt den Näherungsschalter 8 des Reifenfüllanschlusses 4 im Detail. Dieser Näherungsschalter 8 besteht aus einem Wechselschalter (Reedkontakt) 28 und einer vorgeschalteten Schutzschaltung 30 gegen Kurzschluss. Nach außen weist der Reedkontakt 28 drei Anschlüsse 32a, 32b, 32c auf, die mit einem Steuergerät 34 verbunden sind. Der Reedkontakt 28 ist in der Anschlusseinheit für den Reifenfüllanschluss 4 positioniert. Das Bedienteil 14 des Reifenfüllanschlusses 4 ist mit einem Magneten 18 versehen, welcher den Reed-Kontakt 28 beim Stecken zum Schalten anregt. Der Reed-Kontakt 28 ist als Wechsler ausgelegt und wird mittels zweier Eingangspins 32a, 32b des Steuergerätes 34 eingelesen und diagnostiziert. Je nach Kontaktstellung wird Massepotential 32c auf einen der beiden Steuergerätepins 32a, 32b geschaltet. Auf der Leiterplatte des Steuergerätes 34 werden die Eingangspins 32a, 32b mit zwei "Pull-up"-Widerständen 36a, 36b auf High-Pegel gehalten.
Eingang 32a ist bei gestecktem Bedienelement "activ high"; Eingang 32b ist bei gestecktem Bedienelement "activ low".

Gemäß dem erfindungsgemäßen Konzept sind bei elektrischen Fehlern am Wechsler-Kontakt 28 des Reifenfüllanschlusses (RFA) 4 folgende Diagnosen möglich

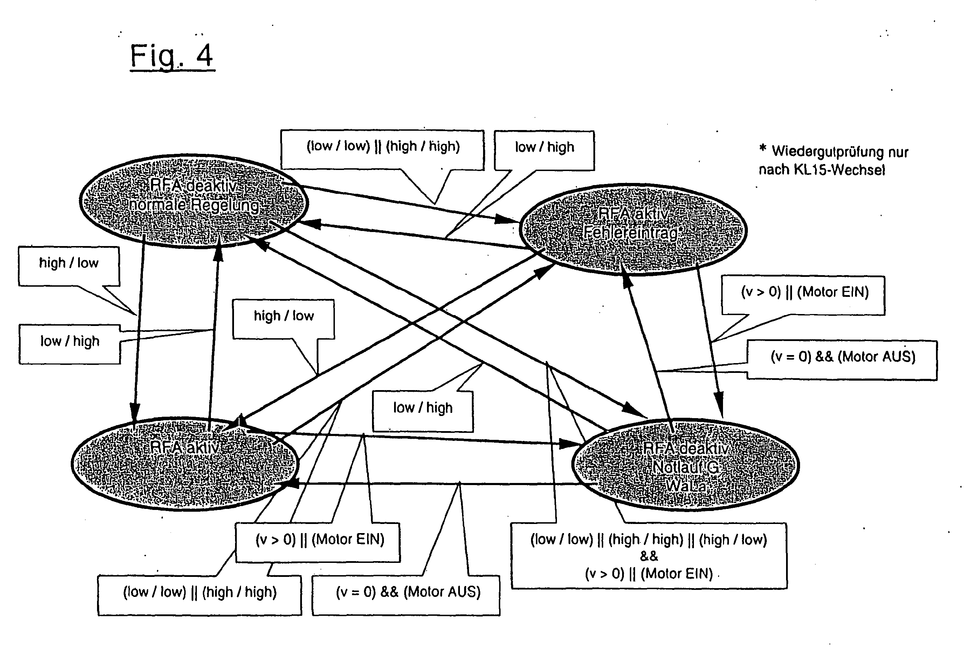

Zustandstabelle des Reed-Kontaktes (vgl. Diagramm Fig. 4):

| Eingang 32a | Eingang 32b | Zustand |
|---|---|---|
| low | low | low/low: nicht in Ordnung => elektrischer Fehler: Kurzschluss nach Masse; |
| low | high | low/high: in Ordnung => kein Bedienelement gesteckt, Reifenfüllanschluss aus; |
| high | low | high/low: in Ordnung => Bedienelement gesteckt, Reifenbefüllung, Reifenfüllanschluss ein; |
| high | high | high/high: nicht in Ordnung => elektrischer Fehler: Kurzschluss nach Plus oder offene Leitung (Leitungsunterbrechung) bzw. unplausibel. |

Der erfindungsgemäß weiterentwickelte Reifenfüllanschluss 4 funktioniert folgendermaßen:
- Im fehlerfreien Zustand wechseln die Eingänge 32a, 32b beim Stecken des Reifenfüllanschlusses 4 ihre logischen Zustände von low/high nach high/low.
- Im fehlerfreien Zustand wechseln die Eingänge 32a, 32b beim Entfernen des Reifenfüllanschlusses 4 ihre logischen Zustände von high/low nach low/high.
- Erkennt das Steuergerät 34 high/high, so hat entweder der Eingang 32a einen Kurzschluss nach Plus erfahren oder der Eingang 32b hat eine elektrische Leitungsunterbrechung (oder Kurzschluss nach Plus), welches bei mechanisch ungestecktem Reifenfüllanschluss 4 nicht diagnostizierbar ist.
- Erkennt das Steuergerät 34 low/low, so hat entweder der Eingang 32b einen Kurzschluss nach Masse erfahren oder der Eingang 32a einen Kurzschluss nach Masse, welches bei mechanisch ungestecktem Reifenfüllanschluss 4 diagnostizierbar ist.
- In beiden Fehlerfällen lässt sich nicht eindeutig unterscheiden, ob der Fehler bei nicht gestecktem Reifenfüllanschluss 4 aufgetreten ist oder ob der Fehler erst durch das Stecken des mechanischen Anschlusses 16 aufgetreten ist. Um eine Reserveradbefüllung dennoch gewährleisten zu können, wird ein Befüllvorgang bereits dann begonnen, wenn lediglich ein Eingang seinen logischen Zustand ändert (und somit beide Eingänge gleiche Zustände besitzen). Es wird dann der entsprechende Fehler diagnostiziert und gespeichert, eine Warnung an den Fahrer wird ausgegeben (gelbe Warnlampe) und im Falle, dass die Bedingungen für eine Reifenbefüllung nicht mehr gegeben sind, wird für die Niveauregulierung der entsprechende Notlauf gesetzt.
- Diese Vorgehensweise ermöglicht dem Fahrer, dass er bei einer Reifenbefüllung durch Stecken des Reed-Kontaktes 28 zwar sog. schlafende Fehler (Kurzschluss nach Masse an Eingang 32a, Kurzschluss nach Plus an Eingang 32b, Leitungsunterbrechung an Eingang 32b) diagnostiziert bekommt, aber nicht die Reifenbefüllung abgebrochen wird. Eine Verfügbarkeit des Reifenfüllanschlusses 4 ist damit deutlich gesteigert.
- Nachteilig wirkt sich dieses Konzept somit auf die Niveauregelung aus, denn ist ein Fehler am Reifenfüllanschluss 4 erst einmal statisch diagnostiziert, so lässt sich nun nicht mehr eindeutig erkennen, ob der Reifenfüllanschluss 4 auch eindeutig wieder abgeklemmt wurde oder nicht. In diesem Fall verweilt der Niveauregler in einem sicheren Systemzustand, wo nur manuelle und automatische Abregelvorgänge zugelassen sind, dem sogenannten Notlauf-Konzept.
- Eine höhere Verfügbarkeit des Reifenfüllanschlusses 4 wird vom Kunden i. a. als höher prior angesehen als ein vollständig funktionierender Niveauregler, der im Reifenfiillanschluss-Fehlerfall keinerlei Reserveradbefüllung erlaubt.

### Bezugszeichenliste

- 2: Luftversorgungssystem
- 4: Reifenfüllanschluss
- 6: Luftversorgungsanschluss
- 8: Näherungsschalter
- 10: elektrischer Sensoranschluss
- 12: pneumatischer Anschluss für Schnellkupplung und Ventilanschluss
- 14: Anschluss "Bedieneinheit", Bedienteil
- 16: pneumatischer Ventilanschluss, mechanischer Anschluss
- 18: Dauermagnet
- 20: Befülleinheit
- 22: Befüllventil
- 24: Manometer
- 26: Faltrad
- 28: Wechselschalter (Reedkontakt)
- 30: Schutzschaltung
- 32a, 32b, 32c: Anschlüsse, Eingänge, Eingangspins (32c Masse)
- 34: Steuergerät
- 36a, 36b: "Pull-up"-Widerstände

## Patentansprüche

1. Verfahren zur Kraftfahrzeug-Reserveradbefüllung,
wobei ein Luftversorgungssystem (2) einer Kraftfahrzeug-Luftfederanlage, die mit einer aus Reifenfüllanschluss (4) und Befülleinheit (20) bestehenden Reifenbefüll-Hardware ausgestattet ist, verwendet wird,
**gekennzeichnet durch** folgende Verfahrensschritte:
- Im fehlerfreien Zustand wechseln Eingänge (32a, 32b) eines mit einem Steuergerät (34) verbundenen Reedkontaktes (28) beim Stecken des Reifenfüllanschlusses (4) ihre logischen Zustände von low/high nach high/low;
- Im fehlerfreien Zustand wechseln die Eingänge (32a, 32b) beim Entfernen des Reifenfüllanschlusses (4) ihre logischen Zustände von high/low nach low/high;
- Erkennt das Steuergerät (34) high/high, so hat entweder der Eingang (32a) einen Kurzschluss nach Plus erfahren oder der Eingang (32b) hat eine Leitungsunterbrechung (oder Kurzschluss nach Plus), welches bei mechanisch ungestecktem Reifenfüllanschluss (4) nicht diagnostizierbar ist;
- Erkennt das Steuergerät (34) low/low, so hat entweder der Eingang (32b) oder der Eingang (32a) einen Kurzschluss nach Masse, welches bei mechanisch ungestecktem Reifenanschluss (4) diagnostizierbar ist,
wobei der Befüllvorgang bereits dann begonnen wird, wenn lediglich einer der beiden Eingänge (32a, 32b) seinen logischen Zustand ändert.

2. Verfahren nach Anspruch 1,
**dadurch gekennzeichnet,**
**dass** gegebenenfalls der entsprechende Fehler diagnostiziert und gespeichert und/oder eine Warnung an den Fahrer ausgegeben wird.

3. Verfahren nach Anspruch 1 oder 2,
**dadurch gekennzeichnet,**
**dass** im Fall, dass die Bedingungen für eine Reifenbefüllung nicht mehr gegeben sind, der entsprechende Notlauf für die Niveauregulierung in Gang gesetzt wird.

4. Vorrichtung zur Kraftfahrzeug-Reserveradbefüllung,
die sich zur Durchführung des Verfahrens nach einem der Ansprüche 1 bis 3 eignet und mindestens die Gesamtheit der Merkmale des Verfahrensanspruch 1 beinhaltet,
wobei ein Luftfedersystem (2) einer Kraftfahrzeug-Luftfederanlage, verwendet wird, die mit einer aus Reifenfüllanschluss (4) und Befülleinheit (20) bestehenden Reifenbefüll-Hardware ausgestattet ist,
mit der zumindest die folgenden Verfahrensschritte durchführbar sind:
- Im fehlerfreien Zustand wechseln Eingänge (32a, 32b) eines mit einem Steuergerät (34) verbundenen Reedkontaktes (28) beim Stecken des Reifenfüllanschlusses (4) ihre logischen Zustände von low/high nach high/low;
- Im fehlerfreien Zustand wechseln die Eingänge (32a, 32b) beim Entfernen des Reifenfüllanschlusses (4) ihre logischen Zustände von high/low nach low/high;
- Erkennt das Steuergerät (34) high/high, so hat entweder der Eingang (32a) einen Kurzschluss nach Plus erfahren oder der Eingang (32b) hat eine Leitungsunterbrechung (oder Kurzschluss nach Plus), welches bei mechanisch ungestecktem Reifenfüllanschluss (4) nicht diagnostizierbar ist;
- Erkennt das Steuergerät (34) low/low, so hat entweder der Eingang (32b) oder der Eingang (32a) einen Kurzschluss nach Masse, welches bei mechanisch ungestecktem Reifenanschluss (4) diagnostizierbar ist,
wobei der Befüllvorgang bereits dann begonnen wird, wenn lediglich einer der beiden Eingänge (32a, 32b) seinen logischen Zustand ändert,
**dadurch gekennzeichnet, dass** der Reifenfüllanschluss (4) einen Luftversorgungsanschluss (6), einen Näherungsschalter (8), einen elektrischen Sensoranschluss (10) und einen pneumatischen Anschluss (12) für Schnellkupplung und Ventilanschluss aufweist,
wobei der Näherungsschalter (8) aus einem Reedkontakt (28) besteht, der nach außen drei Anschlüsse (32a, 32b, 32c) aufweist, die mit einem Steuergerät (34) verbunden sind.

5. Anordnung nach Anspruch 4,
**dadurch gekennzeichnet,**
**dass** dem Reedkontakt (28) eine Schutzschaltung (30) gegen Kurzschluss vorgeschaltet ist.

6. Anordnung nach Anspruch 4 oder 5,
**dadurch gekennzeichnet,**
**dass** an den pneumatischen Anschluss (12) für Schnellkupplung und Ventilanschluss ein Bedienteil (14) mit einem pneumatischen Ventilanschluss (16) und einem Dauermagneten (18) angeschlossen ist, welcher den Reedkontakt (28) beim Stecken zum Schalten anregt.

7. Anordnung nach einem der Ansprüche 4 bis 6
**dadurch gekennzeichnet,**
**dass** sich an den pneumatischen Anschluss (12) für Schnellkupplung und Ventilanschluss die Befülleinheit (20) mit Befüllventil (22) und Manometer (24) anschließt.

8. Anordnung nach einem der Ansprüche 4 bis 7,
**dadurch gekennzeichnet, dass** der Reedkontakt (28) als Wechsler ausgelegt ist und mittels zweier Anschlüsse (32a, 32b) des Steuergerätes (34) eingelesen und diagnostiziert wird,
wobei je nach Kontaktstellung auf einem der beiden Steuergeräte-Anschlüsse (32a, 32b) Massepotential (32c) geschaltet wird.

9. Anordnung nach einem der Ansprüche 4 bis 8,
**dadurch gekennzeichnet,**
**dass** die Anschlüsse (32a, 32b) des Steuergerätes (34) mit zwei "Pull-up"-Widerständen (36a, 36b) auf High-Pegel gehalten werden.

## Claims

1. Method for inflating a motor vehicle spare wheel,
wherein an air supply system (2) of a motor vehicle pneumatic suspension installation which is equipped with tyre inflation hardware which is composed of a tyre inflation connection (4) and an inflation unit (20) is used,
**characterized by** the following method steps:
- in the fault-free state, inputs (32a, 32b) of a reed contact (28) which is connected to a control device (34) change their logic states from low/high to high/low when the tyre inflation connection (4) is plugged in;
- in the fault-free state, the inputs (32a, 32b) change their logic states from high/low to low/high when the tyre inflation connection (4) is removed;
- if the control device (34) recognizes high/high, either the input (32a) has experienced a short circuit to positive or the input (32b) has a line break (or short circuit to positive) which cannot be diagnosed when the tyre inflation connection (4) is mechanically unplugged;
- if the control device (34) recognizes low/low, either the input (32b) or the input (32a) has a short circuit to earth, which can be diagnosed when the tyre inflation connection (4) is mechanically unplugged,
wherein the inflation process is already started if only one of the two inputs (32a, 32b) changes its logic state.

2. Method according to Claim 1, **characterized in that** if appropriate the corresponding fault is diagnosed and stored and/or a warning is issued to the driver.

3. Method according to Claim 1 or 2, **characterized in that** if the conditions for tyre inflation are no longer met, the corresponding emergency operating process for the ride level control is activated.

4. Device for inflating a motor vehicle spare wheel, which is suitable for carrying out the method according to one of Claims 1 to 3 and includes at least the totality of the features of method Claim 1, wherein a pneumatic suspension system (2) of a motor vehicle pneumatic suspension installation is used which is equipped with tyre inflation hardware which is composed of a tyre inflation connection (4) and an inflation unit (20),
with which at least the following method steps can be carried out:
- in the fault-free state, inputs (32a, 32b) of a reed contact (28) which is connected to a control device (34) change their logic states from low/high to high/low when the tyre inflation connection (4) is plugged in;
- in the fault-free state, the inputs (32a, 32b) change their logic states from high/low to low/high when the tyre inflation connection (4) is removed;
- if the control device (34) recognizes high/high, either the input (32a) has experienced a short circuit to positive or the input (32b) has a line break (or short circuit to positive) which cannot be diagnosed when the tyre inflation connection (4) is mechanically unplugged;
- if the control device (34) recognizes low/low, either the input (32b) or the input (32a) has a short circuit to earth, which can be diagnosed when the tyre connection (4) is mechanically unplugged,
wherein the inflation process is already started if only one of the two inputs (32a, 32b) changes its logic state,
**characterized in that** the tyre inflation connection (4) has an air supply connection (6), a proximity switch (8), an electric sensor connection (10) and a pneumatic port (12) for a quick-action coupling and a valve port,
wherein the proximity switch (8) is composed of a reed contact (28) which has, towards the outside, three connections (32a, 32b, 32c) which are connected to a control device (34).

5. Arrangement according to Claim 4, **characterized in that** a protection circuit (30) for protecting against short circuiting is connected upstream of the reed contact (28).

6. Arrangement according to Claim 4 or 5,
**characterized in that** an operator control part (14) with a pneumatic valve port (16) and a permanent magnet (18) which excites the reed contact (28) to switch when plugging in occurs is connected to the pneumatic port (12) for a quick-action coupling and a valve port.

7. Arrangement according to one of Claims 4 to 6,
**characterized in that** the inflation unit (20) with inflation valve (22) and manometer (24) is connected to the pneumatic port (12) for a quick-action coupling and a valve port.

8. Arrangement according to one of Claims 4 to 7,
**characterized in that** the reed contact (28) is configured as a change-over contact and is read in and diagnosed by means of two connections (32a, 32b) of the control device (34),
wherein, depending on the contact positioning, earth potential (32c) is switched onto one of the two control device connections (32a, 32b).

9. Arrangement according to one of Claims 4 to 8,
**characterized in that** the connections (32a, 32b) of the control device (34) are held at the high level with two pull-up resistors (36a, 36b).

## Revendications

1. Procédé de gonflage de la roue de secours d'un véhicule automobile, celui-ci employant un système d'alimentation en air (2) d'un équipement de suspension pneumatique pour véhicule automobile qui est équipé d'un dispositif de gonflage de pneumatique composé d'un raccord de gonflage de pneumatique (4) et d'une unité de gonflage (20), **caractérisé par** les étapes suivantes :
- En l'absence de défaut, les entrées (32a, 32b) d'un contact reed (28) relié avec un module de commande (34) basculent leurs états logiques de bas/haut vers haut/bas lors de l'insertion du raccord de gonflage de pneumatique (4) ;
- En l'absence de défaut, les entrées (32a, 32b) basculent leurs états logiques de haut/bas vers bas/haut lors du retrait du raccord de gonflage de pneumatique (4) ;
- Si le module de commande (34) détecte un niveau haut/haut, alors soit l'entrée (32a) est en court-circuit au plus, soit l'entrée (32b) présente une coupure de ligne (ou un court-circuit au plus), ce qui est impossible à diagnostiquer lorsque le raccord de gonflage de pneumatique (4) n'est pas inséré mécaniquement ;
- Si le module de commande (34) détecte un niveau bas/bas, alors l'entrée (32b) ou l'entrée (32a) présente un court-circuit à la masse, ce qui peut être diagnostiqué lorsque le raccord de gonflage de pneumatique (4) n'est pas inséré mécaniquement, l'opération de gonflage commençant alors déjà lorsque l'une seule des deux entrées (32a, 32b) change d'état logique.

2. Procédé selon la revendication 1, **caractérisé en ce que** le cas échéant, le défaut correspondant est diagnostiqué et mémorisé et/ou un avertissement est émis à l'attention du conducteur.

3. Procédé selon la revendication 1 ou 2,
**caractérisé en ce que** dans le cas où les conditions de gonflage d'un pneumatique ne sont plus réunies, le fonctionnement de secours correspondant de la régulation de niveau est mis en service.

4. Dispositif de gonflage de la roue de secours d'un véhicule automobile qui est conçu pour mettre en oeuvre le procédé selon l'une des revendications 1 à 3 et qui comprend au moins l'intégralité des caractéristiques de la revendication 1, celui-ci employant un système de suspension pneumatique (2) d'un équipement de suspension pneumatique pour véhicule automobile qui est équipé d'un dispositif de gonflage de pneumatique composé d'un raccord de gonflage de pneumatique (4) et d'une unité de gonflage (20) et qui permet d'exécuter au moins les étapes suivantes du procédé :
- En l'absence de défaut, les entrées (32a, 32b) d'un contact reed (28) relié avec un module de commande (34) basculent leurs états logiques de bas/haut vers haut/bas lors de l'insertion du raccord de gonflage de pneumatique (4) ;
- En l'absence de défaut, les entrées (32a, 32b) basculent leurs états logiques de haut/bas vers bas/haut lors du retrait du raccord de gonflage de pneumatique (4) ;
- Si le module de commande (34) détecte un niveau haut/haut, alors soit l'entrée (32a) est en court-circuit au plus, soit l'entrée (32b) présente une coupure de ligne (ou un court-circuit au plus), ce qui est impossible à diagnostiquer lorsque le raccord de gonflage de pneumatique (4) n'est pas inséré mécaniquement ;
- Si le module de commande (34) détecte un niveau bas/bas, alors l'entrée (32b) ou l'entrée (32a) présente un court-circuit à la masse, ce qui peut être diagnostiqué lorsque le raccord de gonflage de pneumatique (4) n'est pas inséré mécaniquement, l'opération de gonflage commençant alors déjà lorsque l'une seule des deux entrées (32a, 32b) change d'état logique,
**caractérisé en ce que** le raccord de gonflage de pneumatique (4) présente un raccord d'alimentation en air (6), un détecteur de proximité (8), un raccord électrique de capteur (10) et un raccord pneumatique (12) pour couplage rapide et raccord de valve, le détecteur de proximité (8) se composant d'un contact reed (28) qui présente vers l'extérieur trois bornes (32a, 32b, 32c) qui sont reliées avec un module de commande (34) .

5. Arrangement selon la revendication 4,
**caractérisé en ce qu'**un circuit de protection (30) contre les courts-circuits est branché avant le contact reed (28).

6. Arrangement selon la revendication 4 ou 5,
**caractérisé en ce qu'**un élément de commande (14) muni d'un raccord de valve pneumatique (16) et d'un aimant permanent (18) qui excite le contact reed (28) pour le faire commuter lors de l'insertion est branché au raccord pneumatique (12) pour couplage rapide et raccord de valve.

7. Arrangement selon l'une des revendications 4 à 6, **caractérisé en ce que** l'unité de gonflage (20) munie d'une valve de gonflage (22) et d'un manomètre (24) se branche au raccord pneumatique (12) pour couplage rapide et raccord de valve.

8. Arrangement selon l'une des revendications 4 à 7, **caractérisé en ce que** le contact reed (28) est réalisé sous la forme d'un inverseur et qu'il est lu et diagnostiqué au moyen de deux bornes (32a, 32b) du module de commande (34), le potentiel de masse (32c) étant commuté sur l'une des deux bornes (32a, 32b) du module de commande en fonction de la position du contact.

9. Arrangement selon l'une des revendications 4 à 8, **caractérisé en ce que** les bornes (32a, 32b) du module de commande (34) sont maintenues au niveau haut avec deux résistances de polarisation positive (36a, 36b).
